# EUROPEAN PATENT APPLICATION

(11) **EP 4 386 054 A1**
(43) Date of publication of application: **19.06.2024**
(21) Application number: 22864365.6
(22) Date of filing: 24.08.2022
(51) Int. Cl.: C08L 83/07, C08K 5/3412, C08K 5/50, C08L 83/05

(54) **THERMOSETTING COMPOSITION**

(30) Priority: 30.08.2021 JP 2021139854
(71) Applicant: Nissan Chemical Corporation, Tokyo 103-6119 (JP)
(72) Inventor: OKUNO, Takahisa, Toyama-shi, Toyama 939-2792 (JP); USUI, Yuki, Toyama-shi, Toyama 939-2792 (JP); YANAI, Masaki, Toyama-shi, Toyama 939-2792 (JP); SHINJO, Tetsuya, Toyama-shi, Toyama 939-2792 (JP)
(74) Representative: Hoffmann Eitle
(86) International application number: PCT/JP2022/031846
(87) International publication number: WO 2023/032781

(57) **Abstract**

A thermosetting composition including: a polyorganosiloxane that has an alkenyl group having 2 to 40 carbon atoms and bonded to a silicon atom, a polyorganosiloxane having a Si-H group, a platinum group metal-based catalyst, and a crosslinking inhibitor, wherein
the crosslinking inhibitor contains at least one of a compound represented by the following formula (1) and a compound represented by the following formula (2): 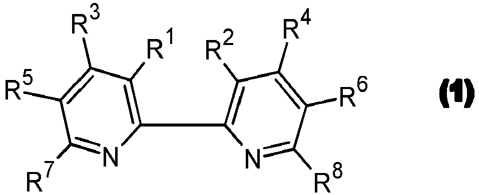 wherein, in the formula (1), R¹ to R⁸ each represent a hydrogen atom, specific groups, or the like; 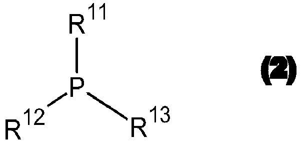 wherein, in the formula (2), R¹¹ to R¹³ each independently represent a hydrocarbon group optionally having a substituent.

## Description

### Technical Field

The present invention relates to a thermosetting composition.

### Background Art

The main curing reaction in the field of silicones is the hydrosilylation reaction, which is also known as polyaddition.

In a hydrosilylation reaction, a compound having at least one unsaturated group reacts with a compound having at least one hydrogen atom bonded to a silicon atom. For example, this reaction is represented by the following reaction formula (I) when the unsaturated group is an alkene type, and is represented by the following reaction formula (II) when the unsaturated group is an alkyne type.

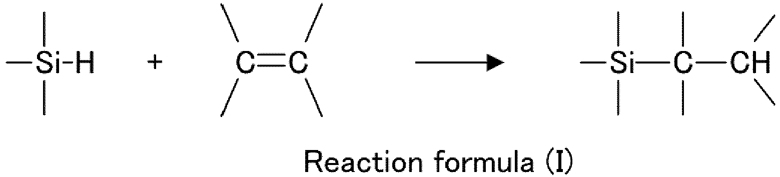

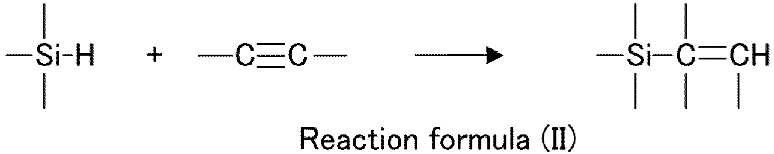

A hydrosilylation reaction is usually carried out using a catalyst. The suitable catalyst for this reaction is a platinum catalyst (for example, Karstedt's catalyst) (for example, Patent Literature 1).

This catalyst makes it possible to carry out a hydrosilylation reaction at room temperature with a rapid reaction rate of about a few minutes.

In general, a thermosetting composition needs to have time to transport, store, and use before curing. On the other hand, a hydrosilylation reaction using a platinum catalyst proceeds at a rapid reaction rate of about a few minutes at room temperature as described above. Therefore, a thermosetting composition utilizing a hydrosilylation reaction often contains a crosslinking inhibitor that temporarily inhibits the hydrosilylation reaction.

For example, it has been proposed that an acetylenic inhibitor is blended as a crosslinking inhibitor in a thermosetting polyorganosiloxane composition that utilizes a hydrosilylation reaction using a platinum catalyst (for example, Patent Literature 2).

As the acetylenic inhibitor, in recent years, an acetylenic alcohol such as 1,1-diphenyl-2-propyne-1-ol has been used (for example, Patent Literature 3).

### Citation List

### Patent Literature

Patent Literature 1: US 3775452 A
Patent Literature 2: US 3445420 A
Patent Literature 3: JP 2014-523938 A

### Summary of Invention

### Technical Problem

When the present inventors used 1,1-diphenyl-2-propyne-1-ol as a crosslinking inhibitor in a thermosetting polyorganosiloxane composition (also referred to as "thermosetting silicone composition"), as an example, the curing start temperature was 118°C (Comparative Example 1 in the present description).

Thermosetting silicone compositions utilizing a hydrosilylation reaction are widely used as various silicone materials such as silicone rubber foams, silicone rubber molds (silicone rubbers for molding), silicone-based sealants, and silicone adhesives. Under such circumstances, thermosetting silicone compositions are required to have different curing start temperatures depending on application. In some uses, a thermosetting silicone composition preferably has a higher curing start temperature. Therefore, a desirable thermosetting silicone composition has a higher curing start temperature as compared with the case of using 1,1-diphenyl-2-propyne-1-ol as a crosslinking inhibitor.

The present invention has been made in view of the above circumstances, and an object of the present invention is to provide a thermosetting composition having a higher curing start temperature as compared with the case of using 1,1-diphenyl-2-propyne-1-ol as a crosslinking inhibitor.

### Solution to Problem

As a result of intensive studies to solve the above problems, the present inventors have found that the above problems can be solved, and have completed the present invention having the following gist.

That is, the present invention includes the following.
[1] A thermosetting composition including: a polyorganosiloxane that has an alkenyl group having 2 to 40 carbon atoms and bonded to a silicon atom, a polyorganosiloxane having a Si-H group, a platinum group metal-based catalyst, and a crosslinking inhibitor, wherein
   the crosslinking inhibitor contains at least one of a compound represented by the following formula (1) and a compound represented by the following formula (2): 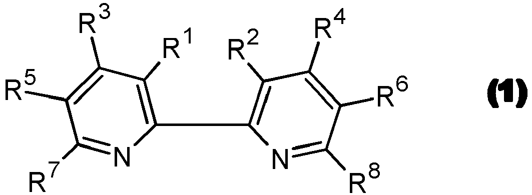
   wherein, in the formula (1), R¹ and R² each independently represent a hydrogen atom or an alkyl group optionally having a substituent, or R¹ and R² are combined with each other to form an aromatic hydrocarbon ring that may have an alkyl group optionally having a substituent, or to form -O-; R³ and R⁴ each independently represent a hydrogen atom or an alkyl group optionally having a substituent; R⁵ and R⁶ each independently represent a hydrogen atom or an alkyl group optionally having a substituent; R⁷ and R⁸ each independently represent a hydrogen atom; R⁵ and R⁷, instead of the above definition, may be combined with each other to form an aromatic hydrocarbon ring that may have an alkyl group optionally having a substituent; R⁶ and R⁸, instead of the above definition, may be combined with each other to form an aromatic hydrocarbon ring that may have an alkyl group optionally having a substituent; and unless R¹ and R² are combined with each other to form -O-, the compound represented by the formula (1) has at least one alkyl group optionally having a substituent; 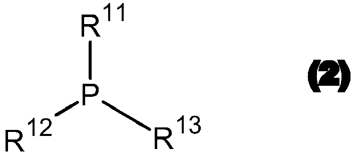
   wherein, in the formula (2), R¹¹ to R¹³ each independently represent a hydrocarbon group optionally having a substituent.
[2] The thermosetting composition according to [1], wherein the crosslinking inhibitor contains the compound represented by the formula (1).
[3] The thermosetting composition according to [1] or [2], wherein, in the formula (1), R¹, R², R⁷, and R⁸ each represent a hydrogen atom, and R³ to R⁶ satisfy the following (i) or (ii):
   (i): R³ and R⁵ each independently represent an alkyl group, and R⁴ and R⁶ each represent a hydrogen atom, and
   (ii): R³ and R⁵ each represent a hydrogen atom, and R⁴ and R⁶ each independently represent an alkyl group.
[4] The thermosetting composition according to any one of [1] to [3], wherein, in the formula (1), the alkyl groups each independently have 1 to 12 carbon atoms.
[5] The thermosetting composition according to [1], wherein the crosslinking inhibitor contains the compound represented by the formula (2).
[6] The thermosetting composition according to [1] or [5], wherein, in the formula (2), R¹¹ to R¹³ each independently represent an alkyl group optionally having a substituent or a phenyl group optionally having a substituent.
[7] The thermosetting composition according to [6], wherein, in the formula (2), the alkyl groups each independently have 1 to 12 carbon atoms.

### Advantageous Effects of Invention

It is possible to provide a thermosetting composition having a higher curing start temperature as compared with the case of using 1,1-diphenyl-2-propyne-1-ol as a crosslinking inhibitor.

### Description of Embodiments

### (Thermosetting composition)

The thermosetting composition of the present invention contains at least a polyorganosiloxane (a1), a polyorganosiloxane (a2), a platinum group metal-based catalyst (A2), and a crosslinking inhibitor (A3), and further contains other components as necessary.

### <Polyorganosiloxane (a1) and polyorganosiloxane (a2)>

The polyorganosiloxane (a1) is a polyorganosiloxane that has an alkenyl group having 2 to 40 carbon atoms and bonded to a silicon atom.

The polyorganosiloxane (a2) is a polyorganosiloxane having a Si-H group.

Here, the alkenyl group having 2 to 40 carbon atoms may be substituted. Examples of the substituent include a halogen atom, a nitro group, a cyano group, an amino group, a hydroxy group, a carboxyl group, an aryl group, and a heteroaryl group.

An example of the polyorganosiloxane (a1) having an alkenyl group having 2 to 40 carbon atoms and bonded to a silicon atom is a polyorganosiloxane (a1') that contains one or two or more of units selected from the group consisting of a siloxane unit represented by SiO₂ (Q' unit), a siloxane unit represented by R¹' R²' R³' SiO_{1/2} (M' unit), a siloxane unit represented by R⁴'R⁵'SiO_{2/2} (D' unit), and a siloxane unit represented by R⁶'SiO_{3/2} (T' unit), and contains at least one kind selected from the group consisting of the M' unit, the D' unit, and the T' unit.

An example of the Si-H group-containing polyorganosiloxane (a2) is a polyorganosiloxane (a2') that contains one or two or more units selected from the group consisting of a siloxane unit represented by SiO₂ (Q" unit), a siloxane unit represented by R¹"R²"R³"SiO_{1/2} (M" unit), a siloxane unit represented by R⁴"R⁵"SiO_{2/2} (D" unit), and a siloxane unit represented by R⁶"SiO_{3/2} (T" unit), and contains at least one selected from the group consisting of the M" unit, the D" unit, and the T" unit.

R¹' to R⁶' are groups bonded to a silicon atom and each independently represent an optionally substituted alkyl group or an optionally substituted alkenyl group, and at least one of R¹' to R⁶' is an optionally substituted alkenyl group. Examples of the substituent include a halogen atom, a nitro group, a cyano group, an amino group, a hydroxy group, a carboxyl group, an aryl group, and a heteroaryl group.

R¹" to R⁶" are groups or atoms bonded to a silicon atom and each independently represent an optionally substituted alkyl group or a hydrogen atom, and at least one of R¹" to R⁶" is a hydrogen atom. Examples of the substituent include a halogen atom, a nitro group, a cyano group, an amino group, a hydroxy group, a carboxyl group, an aryl group, and a heteroaryl group.

The alkyl group may be linear, branched, or cyclic, and is preferably a linear or branched alkyl group. The number of carbon atoms thereof is not particularly limited, and is usually 1 to 40, preferably 30 or less, more preferably 20 or less, and still more preferably 10 or less.

Specific examples of the linear or branched and optionally substituted alkyl group include a methyl group, an ethyl group, a n-propyl group, an i-propyl group, a n-butyl group, an i-butyl group, a s-butyl group, a tertiary butyl group, a n-pentyl group, a 1-methyl-n-butyl group, a 2-methyl-n-butyl group, a 3-methyl-n-butyl group, a 1,1-dimethyl-n-propyl group, a 1,2-dimethyl-n-propyl group, a 2,2-dimethyl-n-propyl group, a 1-ethyl-n-propyl group, a n-hexyl group, a 1-methyl-n-pentyl group, a 2-methyl-n-pentyl group, a 3-methyl-n-pentyl group, a 4-methyl-n-pentyl group, a 1,1-dimethyl-n-butyl group, a 1,2-dimethyl-n-butyl group, a 1,3-dimethyl-n-butyl group, a 2,2-dimethyl-n-butyl group, a 2,3-dimethyl-n-butyl group, a 3,3-dimethyl-n-butyl group, a 1-ethyl-n-butyl group, a 2-ethyl-n-butyl group, a 1,1,2-trimethyl-n-propyl group, a 1,2,2-trimethyl-n-propyl group, a 1-ethyl-1-methyl-n-propyl group, and a 1-ethyl-2-methyl-n-propyl group, but are not limited thereto. The number of carbon atoms thereof is usually 1 to 14, preferably 1 to 10, and more preferably 1 to 6. Among them, a methyl group is particularly preferable.

Specific examples of the cyclic and optionally substituted alkyl group include: cycloalkyl groups, such as a cyclopropyl group, a cyclobutyl group, a 1-methyl-cyclopropyl group, a 2-methyl-cyclopropyl group, a cyclopentyl group, a 1-methyl-cyclobutyl group, a 2-methyl-cyclobutyl group, a 3-methyl-cyclobutyl group, a 1,2-dimethyl-cyclopropyl group, a 2,3-dimethyl-cyclopropyl group, a 1-ethyl-cyclopropyl group, a 2-ethyl-cyclopropyl group, a cyclohexyl group, a 1-methyl-cyclopentyl group, a 2-methyl-cyclopentyl group, a 3-methyl-cyclopentyl group, a 1-ethyl-cyclobutyl group, a 2-ethyl-cyclobutyl group, a 3-ethyl-cyclobutyl group, a 1,2-dimethyl-cyclobutyl group, a 1,3-dimethyl-cyclobutyl group, a 2,2-dimethyl-cyclobutyl group, a 2,3-dimethyl-cyclobutyl group, a 2,4-dimethyl-cyclobutyl group, a 3,3-dimethyl-cyclobutyl group, a 1-n-propyl-cyclopropyl group, a 2-n-propyl-cyclopropyl group, a 1-i-propyl-cyclopropyl group, a 2-i-propyl-cyclopropyl group, a 1,2,2-trimethyl-cyclopropyl group, a 1,2,3-trimethyl-cyclopropyl group, a 2,2,3-trimethyl-cyclopropyl group, a 1-ethyl-2-methyl-cyclopropyl group, a 2-ethyl-1-methyl-cyclopropyl group, a 2-ethyl-2-methyl-cyclopropyl group, and a 2-ethyl-3-methyl-cyclopropyl group; and bicycloalkyl groups, such as a bicyclobutyl group, a bicyclopentyl group, a bicyclohexyl group, a bicycloheptyl group, a bicyclooctyl group, a bicyclononyl group, and a bicyclodecyl group, but are not limited thereto. The number of carbon atoms thereof is usually 3 to 14, preferably 4 to 10, and more preferably 5 to 6.

The alkenyl group may be linear or branched, and the number of carbon atoms thereof is not particularly limited, and is usually 2 to 40, and is preferably 30 or less, more preferably 20 or less, and still more preferably 10 or less.

Specific examples of the linear or branched and optionally substituted alkenyl group include a vinyl group, an allyl group, a butenyl group, and a pentenyl group, and are not limited thereto. The number of carbon atoms thereof is usually 2 to 14, preferably 2 to 10, and more preferably 1 to 6. Among them, an ethenyl group and a 2-propenyl group are particularly preferable.

Specific examples of the cyclic and optionally substituted alkenyl group include, but are not limited to, cyclopentenyl and cyclohexenyl. The number of carbon atoms thereof is usually 4 to 14, preferably 5 to 10, and more preferably 5 to 6.

The polyorganosiloxane (a1') contains one or two or more units selected from the group consisting of the Q' unit, the M' unit, the D' unit, and the T' unit, and also contains at least one selected from the group consisting of the M' unit, the D' unit, and the T' unit. As the polyorganosiloxane (a1'), two or more kinds of polyorganosiloxane satisfying such conditions may be used in combination.

Preferred combinations of two or more selected from the group consisting of the Q' unit, the M' unit, the D' unit, and the T' unit include, but are not limited to, (the Q' unit and the M' unit), (the D' unit and the M' unit), (the T' unit and the M' unit), and (the Q' unit, the T' unit, and the M' unit).

When the polyorganosiloxane (a1') contains two or more kinds of polyorganosiloxane, a combination of (the Q' unit and the M' unit) and (the D' unit and the M' unit), a combination of (the T' unit and the M' unit) and (the D' unit and the M' unit), and a combination of (the Q' unit, the T' unit, and the M' unit) and (the T' unit and the M' unit) are preferable, but the combination is not limited thereto.

The polyorganosiloxane (a2') contains one or two or more units selected from the group consisting of the Q" unit, the M" unit, the D" unit, and the T" unit, and also contains at least one selected from the group consisting of the M" unit, the D" unit, and the T" unit. As the polyorganosiloxane (a2'), two or more kinds of polyorganosiloxane satisfying such conditions may be used in combination.

Preferred combinations of two or more selected from the group consisting of the Q" unit, the M" unit, the D" unit, and the T" unit include, but are not limited to, (the M" unit and the D" unit), (the Q" unit and the M" unit), and (the Q" unit, the T" unit, and the M" unit).

The polyorganosiloxane (a1') is composed of siloxane units in which alkyl groups and/or alkenyl groups are bonded to silicon atoms thereof, and the ratio of alkenyl groups in the total substituents represented by R¹' to R⁶' is preferably 0.1 to 50.0 mol% and more preferably 0.5 to 30.0 mol%, and the remaining R¹' to R⁶' may be alkyl groups.

The polyorganosiloxane (a2') is composed of siloxane units in which alkyl groups and/or hydrogen atoms are bonded to silicon atoms thereof, and the ratio of hydrogen atoms in the total substituent groups and substituent atoms represented by R¹" to R⁶" is preferably 0.1 to 50.0 mol% and more preferably 10.0 to 40.0 moll, and the remaining R¹" to R⁶" may be alkyl groups.

The weight average molecular weight of the polysiloxanes such as the polyorganosiloxane (a1) and the polyorganosiloxane (a2) is not particularly limited, and is usually 500 to 1,000,000, and is preferably 5,000 to 50,000 from the viewpoint of reproducibly realizing the effects of the present invention.

In the present invention, the weight average molecular weight, the number average molecular weight, and the dispersity of the polyorganosiloxanes can be measured, for example, using a GPC apparatus (EcoSEC, HLC-8320GPC; manufactured by Tosoh Corporation) and a GPC column (TSKgel SuperMultipore HZ-N and TSKgel SuperMultipore HZ-H; manufactured by Tosoh Corporation), at a column temperature of 40°C, using tetrahydrofuran as an eluent (elution solvent), at a flow amount (flow rate) of 0.35 mL/min, and using polystyrene (Shodex from Showa Denko K.K.) as a standard sample.

The viscosity of each of the polyorganosiloxane (a1) and the polyorganosiloxane (a2) is not particularly limited, but is usually 10 to 1000000 (mPa·s), and is preferably 50 to 10000 (mPa·s) from the viewpoint of reproducibly realizing the effects of the present invention. The viscosity of each of the polyorganosiloxane (a1) and the polyorganosiloxane (a2) is a value measured with an E-type rotational viscometer at 25°C.

The polyorganosiloxane (a1) and the polyorganosiloxane (a2) react with each other through hydrosilylation reaction to form a film. Therefore, the curing mechanism is different from that via, for example, silanol groups. Therefore, either siloxane does not need to contain a silanol group or a functional group that forms a silanol group through hydrolysis, such as an alkyloxy group.

In the thermosetting composition, the molar ratio between the alkenyl groups contained in the polyorganosiloxane (a1) and the hydrogen atoms constituting a Si-H bond contained in the polyorganosiloxane (a2) (alkenyl group : hydrogen atom constituting Si-H bond) is preferably in the range of 1.0 : 0.5 to 1.0 : 0.66.

### <Platinum group metal-based catalyst (A2)>

The platinum group metal-based catalyst (A2) is a platinum-based metal catalyst.

Such a platinum-based metal catalyst is a catalyst to promote hydrosilylation reaction between the alkenyl group of the polyorganosiloxane (a1) and the Si-H group of the polyorganosiloxane (a2).

As a specific example of the platinum-based metal catalyst, a known platinum-based compound (platinum or a compound containing platinum) can be used.

Specific examples thereof include a platinum fine powder, platinum black, chloroplatinic acid, an alcohol modified product of chloroplatinic acid, a complex of chloroplatinic acid and diolefin, a platinum-olefin complex, a platinum-carbonyl complex [platinum bis(acetoacetate), platinum bis(acetylacetonate), and the like], a chloroplatinic acid-alkenylsiloxane complex (chloroplatinic acid-divinyltetramethyldisiloxane complex, chloroplatinic acid-tetravinyltetramethylcyclotetrasiloxane complex, etc.), a platinum-alkenylsiloxane complex (platinum-divinyltetramethyldisiloxane complex, platinum-tetravinyltetramethylcyclotetrasiloxane complex, etc.), and a complex of chloroplatinic acid and acetylene alcohols. Among them, a platinum-alkenylsiloxane complex is particularly preferable because it is highly effective in accelerating a hydrosilylation reaction.

These hydrosilylation catalysts may be used singly or in combination of two or more kinds thereof.

The alkenyl siloxane used in the platinum-alkenyl siloxane complex is not particularly limited, and examples thereof include 1,3-divinyl-1,1,3,3-tetramethyldisiloxane, 1,3,5,7-tetramethyl-1,3,5,7-tetravinylcyclotetrasiloxane, alkenyl siloxane oligomers in which some of the methyl groups of these alkenyl siloxanes are substituted with ethyl groups, phenyl groups, and the like, and alkenyl siloxane oligomers in which the vinyl groups of these alkenyl siloxanes are substituted with allyl groups, hexenyl groups, and the like. In particular, 1,3-divinyl-1,1,3,3-tetramethyldisiloxane is preferable because the produced platinum-alkenylsiloxane complex has good stability.

The content of the platinum group metal-based catalyst (A2) in the thermosetting composition is not particularly limited, but is usually in the range of 1.0 to 50.0 ppm with respect to the total mass amount of the polyorganosiloxane (a1) and the polyorganosiloxane (a2).

### <Crosslinking Inhibitor (A3)>

The crosslinking inhibitor (A3) contained in the thermosetting composition of the present invention contains at least one of a compound represented by the following formula (1) and a compound represented by the following formula (2).

When the crosslinking inhibitor (A3) contains at least one of the compound represented by the formula (1) and the compound represented by the formula (2), the thermosetting composition utilizing a hydrosilylation reaction has a higher curing start temperature as compared with the case of using 1,1-diphenyl-2-propyne-1-ol.

The present inventors presume that: the thermosetting composition using at least one of the compound represented by the formula (1) and the compound represented by the formula (2) as a crosslinking inhibitor shows a higher curing start temperature as compared with the case of using 1,1-diphenyl-2-propyne-1-ol; and this is because the compound represented by the formula (1) and the compound represented by the formula (2) have higher coordination ability to a platinum group metal-based catalyst as compared with 1,1-diphenyl-2-propyne-1-ol.

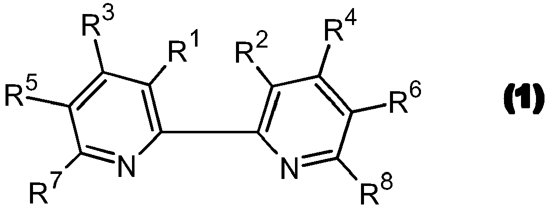

In the formula (1), R¹ and R² each independently represent a hydrogen atom or an alkyl group optionally having a substituent, or R¹ and R² are combined with each other to form an aromatic hydrocarbon ring that may have an alkyl group optionally having a substituent, or to form -O-;
R³ and R⁴ each independently represent a hydrogen atom or an alkyl group optionally having a substituent;
R⁵ and R⁶ each independently represent a hydrogen atom or an alkyl group optionally having a substituent;
R⁷ and R⁸ each independently represent a hydrogen atom.
R⁵ and R⁷, instead of the above definition, may be combined with each other to form an aromatic hydrocarbon ring that may have an alkyl group optionally having a substituent; and
R⁶ and R⁸, instead of the above definition, may be combined with each other to form an aromatic hydrocarbon ring that may have an alkyl group optionally having a substituent.
Unless R¹ and R² are combined with each other to form - O-, the compound represented by the formula (1) has at least one alkyl group optionally having a substituent.

The number of carbon atoms of the alkyl group in the formula (1) is not particularly limited, and is each independently 1 to 12, for example.

The alkyl group in the formula (1) may be linear or branched.

Examples of the alkyl group in the formula (1) include a methyl group, an ethyl group, a propyl group, an isopropyl group, a butyl group, an isobutyl group, a tert-butyl group, a pentyl group, a hexyl group, an octyl group, and a nonyl group.

Examples of the substituent in the alkyl group optionally having a substituent in the formula (1) include a halogen atom, an alkoxy group, an acyl group, a hydroxy group, a carboxy group, an amino group, an imino group, a cyano group, a phenyl group, a thiol group, a sulfo group, a nitro group, an aryl group, and a heteroaryl group. Examples of the alkoxy group include an alkoxy group having 1 to 6 carbon atoms. Examples of the acyl group include an acyl group having 2 to 7 carbon atoms.

Examples of the aromatic hydrocarbon ring that R¹ and R² are combined with each other to form include a benzene ring.

Examples of the aromatic hydrocarbon ring that R⁵ and R⁷ are combined with each other to form include a benzene ring.

Examples of the aromatic hydrocarbon ring that R⁶ and R⁸ are combined with each other to form include a benzene ring.

In the formula (1), R¹, R², R⁷, and R⁸ each represent a hydrogen atom, and R³ to R⁶ preferably satisfy the following (i) or (ii):
(i): R³ and R⁵ each independently represent an alkyl group, and R⁴ and R⁶ each represent a hydrogen atom, and
(ii): R³ and R⁵ each represent a hydrogen atom, and R⁴ and R⁶ each independently represent an alkyl group.

For example, R² and R⁴ are both a hydrogen atom or the same group.

For example, R⁵ and R⁶ are both a hydrogen atom or the same group.

For example, when R⁵ and R⁷ are combined with each other to form an aromatic hydrocarbon ring that may have an alkyl group optionally having a substituent, R⁶ and R⁸ form the same aromatic hydrocarbon ring.

Examples of the compound represented by the formula (1) include a compound represented by the following formula (1-1), a compound represented by the following formula (1-2), a compound represented by the following formula (1-3), and a compound represented by the following formula (1-4). Among them, a compound represented by the following formula (1-1) and a compound represented by the following formula (1-2) are preferable from the viewpoint that the thermosetting composition has a higher curing start temperature.

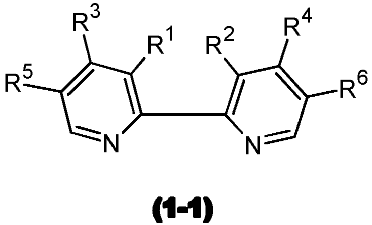

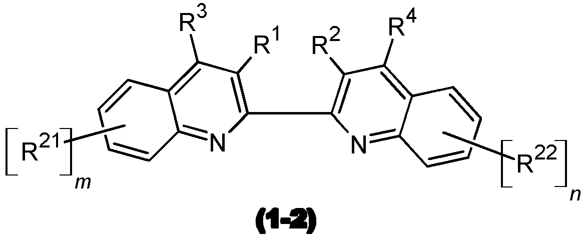

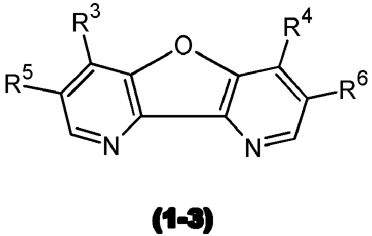

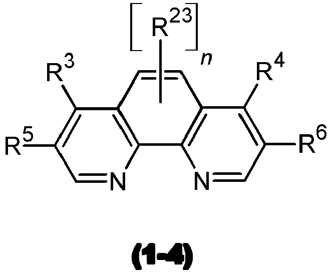

In the formula (1-1), R¹ to R⁶ each independently represent a hydrogen atom or an alkyl group optionally having a substituent. The compound represented by the formula (1-1) has at least one alkyl group optionally having a substituent.

In the formula (1-2), R¹ to R⁴ each independently represent a hydrogen atom or an alkyl group optionally having a substituent. R²¹ and R²² each independently represent an alkyl group optionally having a substituent. "m" and "n" each independently represent an integer of 0 to 4. When "m" is 2 or more, the plurality of R²¹s may be the same or different. When "n" is 2 or more, the plurality of R²²s may be the same or different. The compound represented by the formula (1-2) has at least one alkyl group optionally having a substituent.

In the formula (1-3), R³ to R⁶ each independently represent a hydrogen atom or an alkyl group optionally having a substituent.

In the formula (1-4), R³ to R⁶ each independently represent a hydrogen atom or an alkyl group optionally having a substituent. R²³ represents an alkyl group optionally having a substituent. "n" represents an integer of 0 to 2. When "n" is 2, the plurality of R²³s may be the same or different. The compound represented by the formula (1-4) has at least one alkyl group optionally having a substituent.

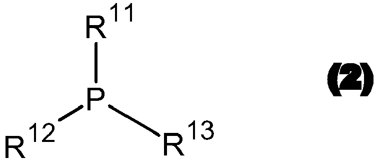

In the formula (2), R¹¹ to R¹³ each independently represent a hydrocarbon group optionally having a substituent.

P represents a phosphorus atom.

For example, R¹¹ to R¹³ each independently represent an alkyl group optionally having a substituent or a phenyl group optionally having a substituent.

The number of carbon atoms of the alkyl group in the alkyl group optionally having a substituent in R¹¹ to R¹³ is not particularly limited, and is independently 1 to 12, for example.

The alkyl group may be linear or branched.

Examples of the alkyl group include a methyl group, an ethyl group, a propyl group, an isopropyl group, a butyl group, an isobutyl group, a tert-butyl group, a pentyl group, a hexyl group, an octyl group, and a nonyl group.

Examples of the substituent in the hydrocarbon group optionally having a substituent in R¹¹ to R¹³ include a halogen atom, an alkoxy group, an acyl group, a hydroxy group, a carboxy group, an amino group, an imino group, a cyano group, a phenyl group, a thiol group, a sulfo group, a nitro group, an aryl group, and a heteroaryl group. Examples of the alkoxy group include an alkoxy group having 1 to 6 carbon atoms. Examples of the acyl group include an acyl group having 2 to 7 carbon atoms.

For example, R¹¹ to R¹³ are the same group.

The content of at least one of the compound represented by the formula (1) and the compound represented by the formula (2) in the thermosetting composition is not particularly limited, but is preferably 0.01 to 10 mass% and more preferably 0.1 to 0.5 mass% with respect to the non-volatile component from the viewpoint of reproducibly realizing the effect of the present invention.

### <Other components>

The other components are not particularly limited, and examples thereof include a solvent and a release agent component.

### <<Solvent>>

The thermosetting composition may contain a solvent for the purpose of adjusting the viscosity. Specific examples thereof include aliphatic hydrocarbons, aromatic hydrocarbons, and ketones, but are not limited thereto.

More specific examples of the solvent include hexane, heptane, octane, nonane, decane, undecane, dodecane, isododecane, menthane, limonene, toluene, xylene, mesitylene, cumene, MIBK (methyl isobutyl ketone), butyl acetate, diisobutyl ketone, 2-octanone, 2-nonanone, and 5-nonanone, but are not limited thereto. Such solvents can be used singly or in combination of two or more kinds thereof.

When the thermosetting composition contains a solvent, the content thereof is appropriately determined in consideration of the desired viscosity of the composition, the coating method to be employed, the thickness of the film to be produced, and the like, and is in a range of about 10 to 90 mass% with respect to the entire composition.

### <<Release agent component>>

The thermosetting composition of the present invention may contain a release agent component.

By containing the release agent component in the thermosetting composition, when the thermosetting composition is used as a releasable adhesive composition, the resulting adhesive layer can be suitably released with good reproducibility.

Typical examples of the release agent component include non-curable polyorganosiloxanes, and specific examples thereof include epoxy group-containing polyorganosiloxanes, methyl group-containing polyorganosiloxanes, and phenyl group-containing polyorganosiloxanes, but are not limited thereto.

Here, in the description, the term "non-curable" means that hydrosilylation reaction does not occur.

Examples of the release agent component include polydimethylsiloxane. The polydimethylsiloxane may be modified. Examples of the optionally modified polydimethylsiloxane include, but are not limited to, an epoxy group-containing polydimethylsiloxane, an unmodified polydimethylsiloxane, and a phenyl group-containing polydimethylsiloxane.

Preferred examples of the polyorganosiloxane as the release agent component include epoxy group-containing polyorganosiloxanes, methyl group-containing polyorganosiloxanes, and phenyl group-containing polyorganosiloxanes, but are not limited thereto.

The weight average molecular weight of the polyorganosiloxane as the release agent component is not particularly limited, but is usually 100,000 to 2,000,000, and is preferably 200,000 to 1,200,000, and more preferably 300,000 to 900,000. In addition, the dispersity is not particularly limited, but is usually 1.0 to 10.0, and is preferably 1.5 to 5.0, and more preferably 2.0 to 3.0 from the viewpoint of reproducibly realizing suitable peeling. The weight average molecular weight and the dispersity can be measured by the above-described method relating to the polyorganosiloxane.

The viscosity of the polyorganosiloxane as the release agent component is not particularly limited, but is usually 1,000 to 2,000,000 mm²/s. The value of the viscosity of the polyorganosiloxane as the release agent component is expressed by kinematic viscosity, and centistokes (cSt) = mm²/s. The value can also be determined by dividing the viscosity (mPa·s) by the density (g/cm³). That is, the value can be determined from the viscosity measured with an E-type rotational viscometer measured at 25°C and the density, and can be calculated from the equation: kinematic viscosity (mm²/s) = viscosity (mPa·s)/density (g/cm³).

Examples of the epoxy group-containing polyorganosiloxane include those containing a siloxane unit (D¹⁰ unit) represented by R¹¹¹R¹¹²SiO_{2/2}.

R¹¹¹ is a group bonded to a silicon atom and represents an alkyl group. R¹¹² is a group bonded to a silicon atom and represents an epoxy group or an organic group containing an epoxy group. Specific examples of the alkyl group include the above-described examples regarding R¹' to R⁶'.

The epoxy group in the organic group containing an epoxy group may be an independent epoxy group that is not fused with other rings, or may be an epoxy group forming a fused ring with other rings, such as a 1,2-epoxycyclohexyl group.

Specific examples of the organic group containing an epoxy group include, but are not limited to, 3-glycidoxypropyl and 2-(3,4-epoxycyclohexyl) ethyl.

Preferred examples of the epoxy group-containing polyorganosiloxane include, but are not limited to, an epoxy group-containing polydimethylsiloxane.

The epoxy group-containing polyorganosiloxane contains the above-described siloxane unit (D¹⁰ unit), and may contain the Q unit, the M unit, and/or the T unit in addition to the D¹⁰ unit.

Specific examples of the epoxy group-containing polyorganosiloxane include a polyorganosiloxane composed only of the D¹⁰ unit, a polyorganosiloxane containing the D¹⁰ unit and the Q unit, a polyorganosiloxane containing the D¹⁰ unit and the M unit, a polyorganosiloxane containing the D¹⁰ unit and the T unit, a polyorganosiloxane containing the D¹⁰ unit, the Q unit, and the M unit, a polyorganosiloxane containing the D¹⁰ unit, the M unit, and the T unit, and a polyorganosiloxane containing the D¹⁰ unit, the Q unit, the M unit, and the T unit.

The epoxy group-containing polyorganosiloxane is preferably an epoxy group-containing polydimethylsiloxane having an epoxy value of 0.1 to 5. The weight average molecular weight thereof is not particularly limited, and is usually 1,500 to 500,000, and is preferably 100,000 or less from the viewpoint of suppressing precipitation in the composition.

Specific examples of the epoxy group-containing polyorganosiloxane include, but are not limited to, those represented by the formulae (E1) to (E3). 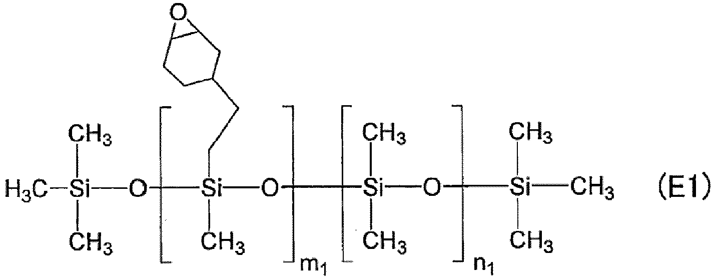 (m₁ and n₁ represent the number of each repeating unit, and are positive integers.) 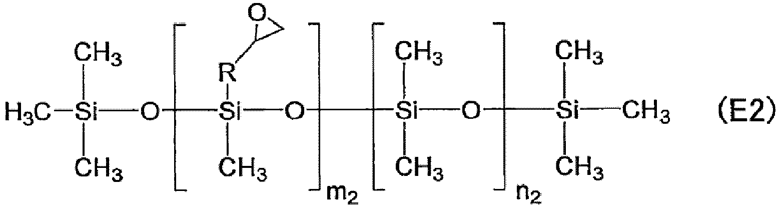 (m₂ and n₂ represent the number of each repeating unit and are positive integers, and R is an alkylene group having 1 to 10 carbon atoms.) 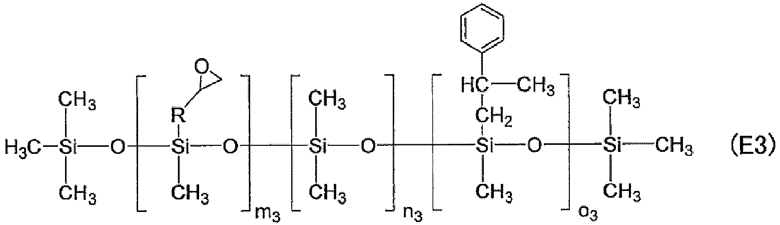 (m₃, n₃, and o₃ represent the number of each repeating unit, and are positive integers, and R is an alkylene group having 1 to 10 carbon atoms.)

Examples of the methyl group-containing polyorganosiloxane include those containing a siloxane unit (D²⁰⁰ unit) represented by R²¹⁰R²²⁰SiO_{2/2}, and preferably those containing a siloxane unit (D²⁰ unit) represented by R²²¹R²²¹SiQ_{2/2}.

R²¹⁰ and R²²⁰ are groups bonded to a silicon atom, and each independently represent an alkyl group, and at least one thereof is a methyl group, and specific examples of the alkyl group include the above-described examples.

R²²¹ is a group bonded to a silicon atom and represents an alkyl group, and specific examples of the alkyl group include the above examples. Among them, R²²¹ is preferably a methyl group.

Preferred examples of the methyl group-containing polyorganosiloxane include, but are not limited to, polydimethylsiloxane.

The methyl group-containing polyorganosiloxane contains the above-described siloxane units (the D²⁰⁰ unit or the D²⁰ unit), and may contain the Q unit, the M unit, and/or the T unit in addition to the D²⁰⁰ unit and the D²⁰ unit.

In an embodiment, specific examples of the methyl group-containing polyorganosiloxane include a polyorganosiloxane composed only of the D²⁰⁰ unit, a polyorganosiloxane containing the D²⁰⁰ unit and the Q unit, a polyorganosiloxane containing the D²⁰⁰ unit and the M unit, a polyorganosiloxane containing the D²⁰⁰ unit and the T unit, a polyorganosiloxane containing the D²⁰⁰ unit, the Q unit, and the M unit, a polyorganosiloxane containing the D²⁰⁰ unit, the M unit, and the T unit, and a polyorganosiloxane containing the D²⁰⁰ unit, the Q unit, the M unit, and the T unit.

Specific examples of the methyl group-containing polyorganosiloxane include a polyorganosiloxane composed only of the D²⁰ unit, a polyorganosiloxane containing the D²⁰ unit and the Q unit, a polyorganosiloxane containing the D²⁰ unit and the M unit, a polyorganosiloxane containing the D²⁰ unit and the T unit, a polyorganosiloxane containing the D²⁰ unit, the Q unit, and the M unit, a polyorganosiloxane containing the D²⁰ unit, the M unit, and the T unit, and a polyorganosiloxane containing the D²⁰ unit, the Q unit, the M unit, and the T unit.

Specific examples of the methyl group-containing polyorganosiloxane include, but are not limited to, those represented by the formula (M1). 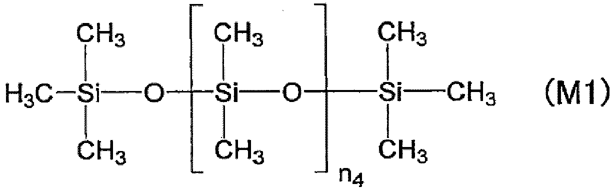 (n₄ represents the number of repeating units, and is a positive integer.)

Examples of the phenyl group-containing polyorganosiloxane include those containing a siloxane unit (D³⁰ unit) represented by R³¹R³²SiO_{2/2}.

R³¹ is a group bonded to a silicon atom and represents a phenyl group or an alkyl group. R³² is a group bonded to a silicon atom and represents a phenyl group. Specific examples of the alkyl group include the above-described examples, and a methyl group is preferable.

The phenyl group-containing polyorganosiloxane contains the above-described siloxane unit (D³⁰ unit), and may contain the Q unit, the M unit, and/or the T unit in addition to the D³⁰ unit.

Specific examples of the phenyl group-containing polyorganosiloxane include a polyorganosiloxane composed only of the D³⁰ unit, a polyorganosiloxane containing the D³⁰ unit and the Q unit, a polyorganosiloxane containing the D³⁰ unit and the M unit, a polyorganosiloxane containing the D³⁰ unit and the T unit, a polyorganosiloxane containing the D³⁰ unit, the Q unit, and the M unit, a polyorganosiloxane containing the D³⁰ unit, the M unit, and the T unit, and a polyorganosiloxane containing the D³⁰ unit, the Q unit, the M unit, and the T unit.

Specific examples of the phenyl group-containing polyorganosiloxane include, but are not limited to, those represented by the formula (P1) or (P2). 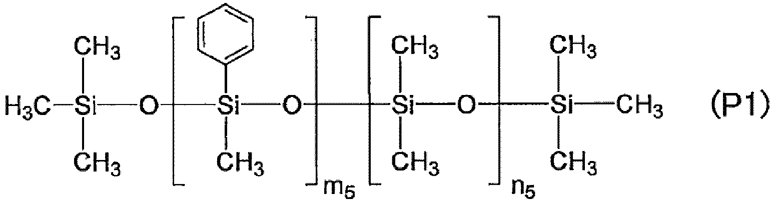 (m₅ and n₅ represent the number of each repeating unit, and are positive integers.) 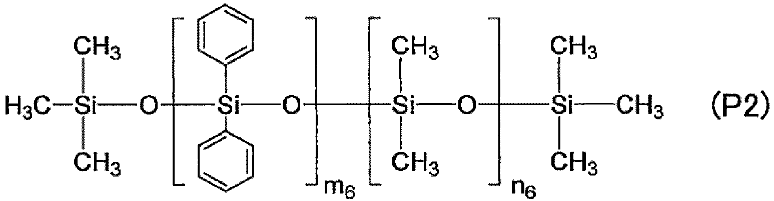 (m₆ and n₆ represent the number of each repeating unit, and are positive integers.)

The polyorganosiloxane as the release agent component may be a commercially available product or a synthetic product.

Examples of commercially available products of the polyorganosiloxane include WACKERSILICONE FLUID AK series (AK 50, AK 350, AK 1000, AK 10000, AK 1000000) and GENIOPLAST GUM, which are products manufactured by Wacker Chemie AG, dimethyl silicone oils (KF-96L, KF-96A, KF-96, KF-96H, KF-69, KF-965, KF-968) and a cyclic dimethyl silicone oil (KF-995), which are manufactured by Shin-Etsu Chemical Co., Ltd.; epoxy group-containing polyorganosiloxanes (trade name: CMS-227, ECMS-327), which are manufactured by Gelest, Inc., epoxy group-containing polyorganosiloxanes manufactured by Shin-Etsu Chemical Co., Ltd. (KF-101, KF-1001, KF-1005, X-22-343), an epoxy group-containing polyorganosiloxane manufactured by Dow Corning Corp. (BY16-839); phenyl group-containing polyorganosiloxanes manufactured by Gelest, Inc. (PMM-1043, PMM-1025, PDM-0421, PDM-0821), a phenyl group-containing polyorganosiloxane manufactured by Shin-Etsu Chemical Co., Ltd. (KF50-3000CS), phenyl group-containing polyorganosiloxanes manufactured by MOMENTIVE (TSF431, TSF433), and the like, but are not limited thereto.

The content of the release agent component in the thermosetting composition is not particularly limited.

The viscosity of the thermosetting composition is not particularly limited, but is usually 500 to 20,000 mPa·s, and preferably 1,000 to 5,000 mPa·s at 25°C. The viscosity of the thermosetting composition can be adjusted by changing the type of solvent to be used, the ratio thereof, the concentration of the film constituent components, and the like, in consideration of various factors such as the coating method to be used and the desired film thickness.

For the purpose of removing foreign substances, a solvent, a solution, or the like to be used may be filtered using a filter or the like during the production of the thermosetting composition or after mixing all the components.

The application of the thermosetting composition of the present invention is not particularly limited, and can be used for all known applications of thermosetting silicone compositions, and examples thereof include various silicone materials such as silicone rubber foams, silicone rubber molds (silicone rubbers for molding), silicone-based sealants, and silicone adhesives.

### Examples

Hereinafter, the present invention will be described more specifically with reference to Examples, but the present invention is not limited to the following Examples. The apparatuses used are as follows.

### [Apparatus]

(1) Stirrer: ARE-500, a rotation and revolution mixer manufactured by THINKY CORPORATION
(2) Rheometer: MCR-302; manufactured by Anton Paar GmbH

### [1] Preparation of thermosetting composition

### [Comparative Example 1]

In a 600 mL stirring vessel dedicated to a rotation and revolution mixer, 54.4 g of a vinyl group-containing MQ resin (manufactured by Wacker Chemie AG) as the polysiloxane (a1), 7.3 g of p-menthane (manufactured by Nippon Terpene Chemicals, Inc.) as a solvent, 3.1 g of propylene glycol 1-monomethyl ether 2-acetate (manufactured by Tokyo Chemical Industry Co., Ltd.) as a second solvent, and 0.22 g of 1,1-diphenyl-2-propyne-1-ol (manufactured by Tokyo Chemical Industry Co., Ltd.) as a crosslinking inhibitor were added, and the resulting mixture was stirred with the rotation and revolution mixer for 5 minutes to obtain a mixture (I).

Into the resulting mixture (I), 8.3 g of a SiH group-containing linear polydimethylsiloxane (manufactured by Wacker Chemie AG) having a viscosity of 100 mPa·s as the polysiloxane (a2) and 24.5 g of a vinyl group-containing linear polydimethylsiloxane (manufactured by Wacker Chemie AG) having a viscosity of 200 mPa·s as the polysiloxane (a1) were added, and the mixture was further stirred for 5 minutes with the rotation and revolution mixer to obtain a mixture (II).

In a 50 mL screw tube, 0.44 g of a platinum catalyst (manufactured by Wacker Chemie AG) as the (A2) and 3.6 g of a vinyl group-containing linear polydimethylsiloxane (manufactured by Wacker Chemie AG) having a viscosity of 1000 mPa·s as the polysiloxane (a1) were stirred for 5 minutes with the rotation and revolution mixer to obtain a mixture (III).

Into the mixture (II), 2.0 g of the mixture (III) was added, and the mixture was further stirred for 5 minutes with the rotation and revolution mixer, and the resulting mixture was filtered through a nylon filter 300 mesh to obtain a thermosetting composition. The viscosity of the thermosetting composition measured using a rotational viscometer was 700 mPa·s.

### [Example 1]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of 4,4'-dimethyl-2,2'-bipyridyl (manufactured by Tokyo Chemical Industry Co., Ltd.) in Comparative Example 1.

### [Example 2]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of 5,5'-dimethyl-2,2'-bipyridyl (manufactured by Tokyo Chemical Industry Co., Ltd.) in Comparative Example 1.

### [Example 3]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of 4,4'-di-tert-butyl-2,2'-bipyridyl (manufactured by Tokyo Chemical Industry Co., Ltd.) in Comparative Example 1.

### [Example 4]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of 4,4'-dinonyl-2,2'-bipyridyl (manufactured by Tokyo Chemical Industry Co., Ltd.) in Comparative Example 1.

The nonyl group of 4,4'-dinonyl-2,2'-bipyridyl is a n-nonyl group.

### [Example 5]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of 4,5-diazafluoren-9-one (manufactured by Tokyo Chemical Industry Co., Ltd.) in Comparative Example 1.

### [Example 6]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of tributylphosphine ((CH₃CH₂CH₂CH₂)₃P manufactured by Tokyo Chemical Industry Co., Ltd.) in Comparative Example 1.

### [Example 7]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of triphenylphosphine (manufactured by Tokyo Chemical Industry Co., Ltd.) in Comparative Example 1.

### [Example 8]

A thermosetting composition was obtained in the same manner as in Comparative Example 1 except that 0.22 g of 1,1-diphenyl-2-propyne-1-ol (manufactured by Tokyo Chemical Industry Co., Ltd.) was changed to 0.22 g of tris(4-methoxyphenyl)phosphine (manufactured by Tokyo Chemical Industry Co., Ltd.) in Comparative Example 1.

### [Measurement of curing start temperature with rheometer]

The thermosetting compositions obtained in Comparative Example 1 and Examples 1 to 8 were measured for complex viscosity with the rheometer while the temperature was raised from 25°C to 200°C at a temperature raising rate of 10 °C/min. From the measurement results, the temperature at which the viscosity increased by 10 Pa·s or more while the temperature increased by 1°C was defined as the curing start temperature. The measurement temperature was read in increments of 1°C. The measurement results of the curing start temperature are shown in Table 1.

**[Table 1]**

| Composition | Crosslinking inhibitor | Curing start temperature [°C] |
|---|---|---|
| Comparative Example 1 | 1,1-diphenyl-2-propyne-1-ol | 118 |
| Example 1 | 4,4'-dimethyl-2,2'-bipyridyl | 173 |
| Example 2 | 5,5'-dimethyl-2,2'-bipyridyl | 173 |
| Example 3 | 4,4'-di-tert-butyl-2,2'-bipyridyl | 182 |
| Example 4 | 4,4'-dinonyl-2,2'-bipyridyl | 188 |
| Example 5 | 4,5-diazafluoren-9-one | 135 |
| Example 6 | Tributylphosphine | 168 |
| Example 7 | Triphenylphosphine | 183 |
| Example 8 | Tris(4-methoxyphenyl)phosphine | 177 |

From the results in Table 1, the crosslinking inhibitors used in Examples 1 to 8 had a stronger inhibitory effect on the crosslinking reaction than the crosslinking inhibitor used in Comparative Example 1, and the curing start temperature increased. Since there is a difference in the curing start temperatures among Examples 1 to 8, it is possible to control the curing temperature of the composition by appropriately selecting the kind of inhibitor.

## Claims

1. A thermosetting composition comprising:
a polyorganosiloxane that has an alkenyl group having 2 to 40 carbon atoms and bonded to a silicon atom, a polyorganosiloxane having a Si-H group, a platinum group metal-based catalyst, and a crosslinking inhibitor, wherein
the crosslinking inhibitor contains at least one of a compound represented by the following formula (1) and a compound represented by the following formula (2): 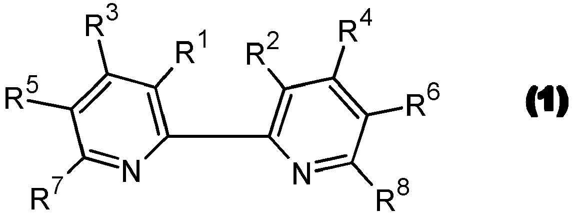
wherein, in the formula (1), R¹ and R² each independently represent a hydrogen atom or an alkyl group optionally having a substituent, or R¹ and R² are combined with each other to form an aromatic hydrocarbon ring that may have an alkyl group optionally having a substituent, or to form -O-; R³ and R⁴ each independently represent a hydrogen atom or an alkyl group optionally having a substituent; R⁵ and R⁶ each independently represent a hydrogen atom or an alkyl group optionally having a substituent; R⁷ and R⁸ each independently represent a hydrogen atom; R⁵ and R⁷, instead of the above definition, may be combined with each other to form an aromatic hydrocarbon ring that may have an alkyl group optionally having a substituent; R⁶ and R⁸, instead of the above definition, may be combined with each other to form an aromatic hydrocarbon ring that may have an alkyl group optionally having a substituent; and unless R¹ and R² are combined with each other to form -O-, the compound represented by the formula (1) has at least one alkyl group optionally having a substituent; 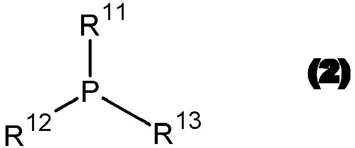
wherein, in the formula (2), R¹¹ to R¹³ each independently represent a hydrocarbon group optionally having a substituent.

2. The thermosetting composition according to claim 1, wherein the crosslinking inhibitor contains the compound represented by the formula (1).

3. The thermosetting composition according to claim 1 or 2,
wherein, in the formula (1), R¹, R², R⁷, and R⁸ each represent a hydrogen atom, and R³ to R⁶ satisfy the following (i) or (ii):
(i): R³ and R⁵ each independently represent an alkyl group, and R⁴ and R⁶ each represent a hydrogen atom, and
(ii): R³ and R⁵ each represent a hydrogen atom, and R⁴ and R⁶ each independently represent an alkyl group.

4. The thermosetting composition according to claim 1, wherein, in the formula (1), the alkyl groups each independently have 1 to 12 carbon atoms.

5. The thermosetting composition according to claim 1, wherein the crosslinking inhibitor contains the compound represented by the formula (2).

6. The thermosetting composition according to claim 1 or 5, wherein, in the formula (2), R¹¹ to R¹³ each independently represent an alkyl group optionally having a substituent or a phenyl group optionally having a substituent.

7. The thermosetting composition according to claim 6, wherein, in the formula (2), the alkyl groups each independently have 1 to 12 carbon atoms.
